# FASCICULE DE BREVET EUROPEEN

(11) **EP 1 474 601 B1**
(45) Date de publication et mention de la délivrance du brevet: **08.09.2010**
(21) Numéro de dépôt: 03709925.6
(22) Date de dépôt: 06.02.2003
(51) Int. Cl.: F02M 31/10, F02B 29/04, F02M 25/07

(54) **PROCEDE DE CONTROLE DE LA TEMPERATURE DE GAZ ADMIS DANS UN MOTEUR DE VEHICULE AUTOMOBILE, ECHANGEUR ET DISPOSITIF DE GESTION DE LA TEMPERATURE DE CES GAZ**
VERFAHREN UND VORRICHTUNG ZUR TEMPERATURREGELUNG DER EINLASSLUFT EINES MOTORS MITTELS EINEM WÄRMEAUSTAUCHER
METHOD FOR CONTROLLING THE TEMPERATURE OF GASES FED INTO THE ENGINE OF A MOTOR VEHICLE, EXCHANGER, AND DEVICE FOR CONTROLLING THE TEMPERATURE OF SAID GASES

(30) Priorité: 12.02.2002 FR 0201715
(43) Date de publication de la demande: 10.11.2004
(73) Titulaire: VALEO THERMIQUE MOTEUR, 78321 La Verrière (FR)
(72) Inventeur: GUERRERO, Pascal, F-78320 Le Mesnil Saint Denis (FR)
(74) Mandataire: Rolland, Jean-Christophe
(86) Numéro de dépôt international: PCT/FR2003/000371
(87) Numéro de publication internationale: WO 2003/069149

(56) Documents cités:
- EP-A- 1 170 498
- DE-A- 4 033 796
- DE-A- 19 924 677
- US-A- 3 977 195
- US-A- 4 207 848
- US-A- 4 348 991
- US-B1- 6 167 703
- PATENT ABSTRACTS OF JAPAN vol. 2002, no. 05, 3 mai 2002 (2002-05-03) & JP 2002 021653 A (NIIGATA ENG CO LTD), 23 janvier 2002 (2002-01-23)

## Description

L'invention concerne un procédé et un procédé de contrôle de la température de gaz admis dans un moteur à combustion interne, notamment un moteur de véhicule automobile.

Les moteurs des véhicules automobiles modernes ont des puissances spécifiques de plus en plus élevées. On fait pénétrer dans les chambres de combustion du moteur des quantités d'air accrues afin d'y injecter également plus de carburant. C'est pourquoi on comprime l'air d'admission admis dans le moteur. Toutefois, les niveaux de compression atteints aujourd'hui sont de plus en plus élevés, de sorte que cette compression induit un échauffement important de l'air. Ce dernier doit donc être refroidi préalablement à son admission dans le moteur. C'est la raison pour laquelle on prévoit un refroidisseur d'air de suralimentation, la plupart du temps un échangeur air ambiant/air de suralimentation. L'augmentation des taux de compression de l'air d'alimentation conduit à augmenter la taille du refroidisseur d'air de suralimentation, et par conséquent son encombrement. Il devient par conséquent de plus en plus difficile de le loger en face avant du véhicule.

On connaît également des refroidisseurs d'air de suralimentation refroidis par le fluide de refroidissement du moteur, généralement de l'eau. L'utilisation de l'eau de refroidissement du moteur pour refroidir l'air de suralimentation permet de libérer de l'espace en face avant du véhicule et de moins pénaliser le refroidissement du moteur en vitesse d'air et en température et le condenseur de climatisation en vitesse d'air. Toutefois, la fonction unique de ces échangeurs connus est le refroidissement de l'air de suralimentation.

Par ailleurs, indépendamment de l'augmentation de la puissance spécifique du moteur, les normes environnementales imposent une réduction importante des niveaux d'émission des polluants solides et gazeux. C'est la raison pour laquelle on utilise des pots catalytiques et, sur les moteurs diesel, des filtres à particules. Les pots catalytiques et le catalyseur des filtres à particules doivent être amorcés le plus rapidement possible au démarrage du moteur. C'est pourquoi il est nécessaire de réchauffer l'air admis dans le moteur en phase de démarrage. Pour ce faire, on utilise un échangeur spécifique qui permet de réchauffer l'air d'admission par échange de chaleur avec l'eau de refroidissement du moteur. Cet échangeur est également activé lors de la phase de régénération du filtre à particules des moteurs diesel.

D'autre part, pour réduire la formation des oxydes d'azote à faible charge et à charge partielle du moteur, on recircule une partie des gaz d'échappement de l'échappement vers l'admission afin de diminuer la température de combustion et la formation des oxydes d'azote. Pour améliorer le refroidissement de ces gaz, on a introduit un échangeur de chaleur entre les gaz d'échappement dont la température peut atteindre 500°C environ-et l'eau de refroidissement du moteur dont la température est de 100°C environ. Un échangeur de ce type est présent sur de nombreux véhicules diesel.

Ainsi, les besoins de réchauffer ou de refroidir les gaz admis dans les chambres de combustion du moteur nécessitent la présence de trois échangeurs de chaleur distincts : un échangeur de refroidissement de l'air de suralimentation, un échangeur de chauffage des gaz admis en période de démarrage du moteur et un refroidisseur des gaz d'échappement recyclés.

Ces trois échangeurs sont coûteux à fabriquer. En outre, ils occupent un volume important sous le capot moteur. On connaît aussi du document JP-A-2002021653 un procédé de contrôle selon le préambule de la revendication 1.

La présente invention a pour objet un procédé de contrôle de la température des gaz admis dans un moteur de véhicule automobile qui permet la réduction du nombre des échangeurs et, par suite, une diminution de leur coût et de leur encombrement.

Ce résultat est atteint conformément à l'invention par le fait qu'on fait circuler les gaz dans un échangeur liquide/gaz préalablement à leur admission dans le moteur thermique à combustion interne, ledit échangeur liquide/gaz comportant un étage à haute température dans lequel peut circuler un liquide à haute température, et un étage à basse température dans lequel peut circuler le liquide à basse température, et qu'on contrôle la circulation des liquides à haute température et à basse température en fonction des besoins.

Dans une variante non couverte par l'invention, l'échangeur de chaleur est un échangeur à un seul étage et l'on prévoit des moyens de vanne pour faire circuler soit un liquide à basse température, soit un liquide à haute température, soit un mélange des deux liquides dans l'échangeur.

Dans une autre variante non couverte par l'invention, cet échangeur liquide/gaz comporte une section traversée par l'air d'alimentation du moteur et une section traversée par une fraction recirculée des gaz d'échappement.

Selon un morde de réalisation selon l'invention, l'échangeur liquide/gaz comporte un étage à haute température dans lequel on peut faire circuler un liquide à haute température, et un étage à basse température dans lequel on peut faire circuler un liquide à basse température, des moyens d'interconnexion permettant de contrôler la circulation des liquides à haute température et à basse température en fonction des besoins.

Dans une variante de réalisation particulière, l'étage à haute température de cet échangeur comporte une section traversée par l'air d'alimentation du moteur et une section traversée par une fraction recirculée des gaz d'échappement.

L'étage à basse température de cet échangeur peut également comporter une section traversée par l'air d'alimentation du moteur et une section traversée par une fraction recirculée des gaz d'échappement.

Dans les variantes à étages évoquées plus haut, on fait, de façon avantageuse, circuler l'air d'alimentation du moteur en série à travers les étages. L'échangeur conforme à l'invention est alors prévu apte à autoriser une circulation de l'air d'alimentation du moteur selon un tel mode de fonctionnement.

Que ce soit dans le cadre d'un échangeur à étages ou non, on fait, de façon avantageuse, circuler le liquide, chaud ou froid, en série au niveau de la ou des sections traversées par l'air d'alimentation du moteur puis au niveau de la ou des sections traversées par une fraction recirculée des gaz d'échappement. L'échangeur conforme à l'invention est alors prévu apte à autoriser une circulation du liquide selon un tel mode de fonctionnement.

Par ailleurs, l'invention concerne un dispositif de gestion de la température des gaz admis dans un moteur thermique, notamment de véhicule automobile, comprenant une boucle principale équipée d'une pompe principale pour faire circuler un fluide caloporteur entre le moteur thermique et un radiateur de refroidissement principal à haute température. Une boucle secondaire inclut un radiateur secondaire à basse température, le système comprenant en outre un radiateur liquide/gaz conforme à l'invention et des moyens d'interconnexion qui permettent de faire circuler le fluide caloporteur dans l'échangeur liquide/gaz en fonction des besoins de réchauffer et/ou de refroidir les gaz admis dans le moteur.
- Selon une variante non couverte par l'invention, le dispositif de gestion comporte un échangeur à étage unique et une vanne à trois voies permettant de faire circuler soit le fluide caloporteur chaud sortant directement du moteur à combustion interne dans l'échangeur, soit un fluide caloporteur froid sortant du radiateur à basse température, soit un mélange adéquat des deux fluides.
- Selon une autre variante non couverte par l'invention, le dispositif de gestion comporte un échangeur de chaleur à étage unique et un piquage sur le circuit de fluide à haute température équipé d'une pompe de circulation additionnelle, une vanne permettant de faire circuler soit le fluide caloporteur chaud sortant directement du moteur thermique, soit le fluide caloporteur froid refroidi dans le radiateur à basse température, soit un mélange adéquat des deux fluides.
- Selon l'invention, le dispositif de gestion comporte un échangeur de chaleur à deux étages, une vanne à trois voies permettant de faire circuler le fluide caloporteur chaud sortant du moteur à combustion interne dans l'étage à haute température et un fluide caloporteur froid refroidi dans le radiateur à basse température dans l'étage à basse température de l'échangeur, soit un mélange adéquat des deux fluides dans l'étage approprié.
- Selon l'invention, le dispositif de gestion comporte un échangeur de chaleur à deux étages, une vanne à deux voies permettant de faire circuler le fluide caloporteur chaud sortant directement du moteur à combustion interne dans l'étage à haute température de l'échangeur, une boucle additionnelle équipée d'une pompe de circulation permettant de faire circuler

le fluide caloporteur froid refroidi dans le radiateur à basse température dans l'étage à basse température de l'échangeur.

D'autres caractéristiques et avantages de la présente invention apparaîtront encore à la lecture de la description qui suit d'exemples de réalisation donnés à titre illustratif en référence aux figures annexées. Sur ces figures :
- la Figure 1 est une vue schématique d'un échangeur de chaleur liquide/gaz à un seul étage;
- la Figure 2 est une vue schématique d'un échangeur de chaleur d'un dispositif comportant deux sections d'échange de chaleur ;
- la Figure 3 est une vue schématique d'un échangeur de chaleur d'un dispositif comportant un étage à haute température et un étage à basse température ;
- les Figures 4 et 5 sont deux schémas qui illustrent une comparaison entre un refroidisseur à étage unique et un refroidisseur à deux étages ;
- la Figure 6 est une vue schématique d'un échangeur d'un dispositif conforme à la présente invention comportant un étage à haute température et un étage à basse température, l'étage à haute température comportant deux sections d'échange de chaleur ;
- la Figure 7 représente un échangeur similaire à l'échangeur de la Figure 6, l'étage à basse température comportant en outre une seconde section d'échange de chaleur ; et
- les Figures 8 à 11 représentent quatre exemples de réalisation, non limitatifs, de dispositifs de gestion de la température des gaz admis dans un moteur thermique de véhicule automobile, les dispositifs des figures 10 et 11 étant conformes à la présente invention.

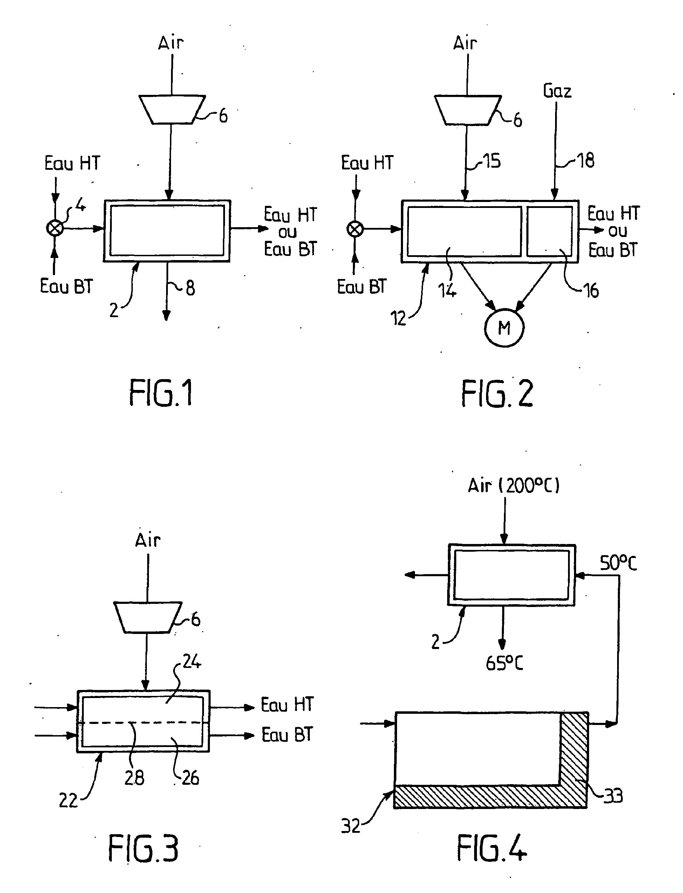

Sur la Figure 1, l'échangeur liquide/gaz désigné par la référence générale 2 comporte un étage unique. Cet échangeur permet un échange de chaleur entre un liquide et un gaz. Le gaz est constitué par l'air d'alimentation du moteur thermique. Le liquide est constitué par l'eau de refroidissement du moteur du véhicule automobile. On peut faire circuler dans l'échangeur 2 soit de l'eau à haute température (HT), soit de l'eau à basse température (BT), soit un mélange des deux fluides, en fonction de la position d'une vanne 4 à trois voies. Lorsque l'eau à basse température circule à travers l'échangeur 2, ce dernier agit comme refroidisseur d'air de suralimentation. L'air d'admission comprimé et échauffé dans le compresseur 6 est refroidi en traversant l'échangeur avant d'être dirigé vers les chambres d'alimentation du moteur, comme schématisé par la flèche 8. Au contraire, lorsque l'on désire échauffer l'air admis dans le moteur, par exemple en phase de démarrage du véhicule ou en phase de régénération du filtre à particules, on fait circuler de l'eau à haute température dans le radiateur, ce qui réchauffe l'air admis dans le moteur. L'eau à basse température provient, par exemple, d'un radiateur à basse température. L'eau à haute température provient d'un piquage réalisé en sortie de moteur thermique.

On a représenté sur la Figure 2 un échangeur de chaleur 12 à étage unique, comme l'échangeur de la Figure 1, mais comportant une première section d'échange 14 destinée à être traversée par l'air d'admission 15 du moteur et une section d'échange de chaleur 16 destinée à être traversée par les gaz d'échappement recyclés. Comme dans l'exemple de réalisation précédent, le liquide de refroidissement est constitué par l'eau de refroidissement du moteur, cette eau étant une eau à basse température (BT), à haute température (HT), ou un mélange des deux fluides, selon la position de la vanne à trois voies 4. La section d'échange de chaleur 14 fonctionne de manière identique à l'échangeur de chaleur 2 représenté sur la Figure 1.

Lorsque l'eau à basse température circule dans l'échangeur 12 et donc dans la section 14, l'air de suralimentation du moteur est chauffé après sa compression dans le compresseur 6 et refroidi avant d'être dirigé vers le moteur. Au contraire, lorsque l'on désire réchauffer l'air admis dans le moteur, par exemple en phase de démarrage du véhicule, on fait circuler de l'eau chaude dans l'échangeur 12. Les gaz d'échappement recirculés pénètrent dans la section d'échange 16, comme schématisé par la flèche 18. Ces gaz, dont la température est élevée, jusqu'à 500°C, peuvent être refroidis par l'eau à haute température dont la température est de 100°C environ.

Il est possible également de refroidir les gaz de recirculation 18 avec de l'eau froide afin d'augmenter encore l'effet de refroidissement et d'accroître l'effet visé qui est de diminuer la formation d'oxyde d'azote.

Dans chacun des cas évoqués plus hauts, le liquide de refroidissement, chaud ou froid, traverse d'abord, dans l'exemple représenté, la section d'échange de chaleur 14 avec l'air admis dans le moteur, puis la section d'échange de chaleur 16 de refroidissement des gaz d'échappement. Cette solution est préférée parce qu'elle permet de ne pas refroidir excessivement les gaz d'échappement qui risqueraient de colmater l'échangeur. Toutefois, on peut également envisager un ordre inverse, tout en restant en série.

Le refroidissement des gaz d'échappement doit se faire à faible charge. Dans cette configuration, il n'est pas nécessaire de refroidir de manière énergique l'air de suralimentation du moteur parce que la puissance demandée au moteur thermique est peu élevée, le refroidissement de l'air suralimenté étant nécessaire particulièrement en cas de forte charge. Par conséquent, l'échangeur de chaleur unique 12 peut refroidir au moins l'un des deux gaz admis dans le moteur thermique, si ce n'est les deux, en cas de charge moyenne. Après avoir traversé l'échangeur, l'air 15 et les gaz de recirculation 18 sont mélangés pour former un mélange M et être dirigés vers le moteur.

On a représenté sur la Figure 3 un mode de réalisation d'un échangeur 22 d'un dispositif selon l'invention comportant un étage à haute température 24 et un étage à basse température 26, destinés à être traversés successivement par l'air d'admission du moteur. Dans le cas où l'on souhaite réchauffer l'air d'admission du moteur, au dessus d'une certaine température ambiante extérieure, par exemple 0°C, ou en phase de régénération du filtre à particules, on bloque la circulation de l'eau froide dans l'étage à basse température 26 et on active la circulation de l'eau chaude dans l'étage à haute température 24. L'échangeur 22 sert alors de réchauffeur d'admission au moyen de son étage à haute température 24.

Inversement, lorsque l'échangeur 22 est utilisé comme refroidisseur d'air de suralimentation, l'air provenant du turbocompresseur 6 traverse d'abord l'étage à haute température 24, autrement dit celui qui est traversé par l'eau chaude provenant du moteur, puis l'étage à basse température 26 dans lequel l'air qui a déjà été refroidi lors de sa traversée du premier étage 24 se refroidit encore davantage avec de l'eau froide provenant d'un radiateur à basse température. On peut également utiliser l'étage 26 à basse température seul lorsque la charge du moteur est moins importante. On autorise la circulation de l'eau chaude et de l'eau froide dans les étages à haute température et à basse température au moyen de moyens d'interconnexion tels que des vannes et des pompes en fonction du but recherché.

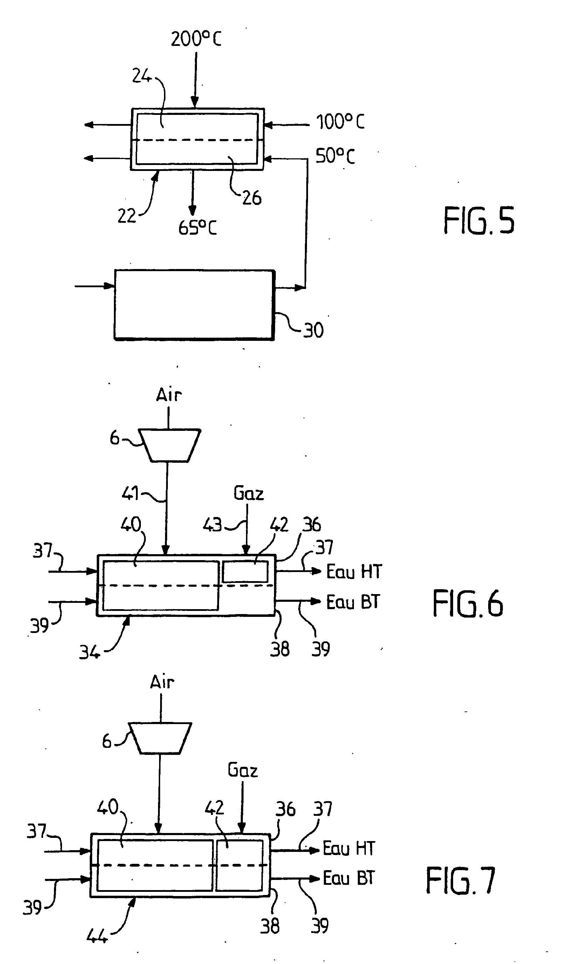

L'échangeur 22 à deux étages présente un meilleur rendement thermique que l'échangeur 2 à un étage unique. Les Figures 4 et 5 illustrent une comparaison entre ces deux types d'échangeurs. Dans les deux cas, l'air de suralimentation à refroidir pénètre dans l'échangeur à une température de 200°C. La température de l'eau à haute température est prise égale à 100°C et la température de l'eau à basse température est égale à 50°C. Dans le cas de l'échangeur 22 (Figure 5), une partie importante de la puissance thermique est évacué dans l'étage à haute température 24 par échange avec de l'eau à 100°C et on va chercher le niveau de température de sortie (65°C) sur l'étage à basse température 26. Le radiateur à basse température 30 a donc seulement un rôle d'appoint. Au contraire, dans le cas de l'échangeur 2 à un étage unique (Figure 4), la totalité de la puissance thermique est extraite au moyen d'eau à basse température (50°C). En conséquence, pour une même température de sortie de l'air de suralimentation en sortie d'échangeur (65°C), le radiateur à basse température 32 doit avoir une surface d'échange supplémentaire, par exemple 25 %, comme schématisé par la surface 33, ce qui représente un surcoût.

On a représenté sur la Figure 6 un échangeur de chaleur 34 d'un dispositif selon l'invention comportant un étage à haute température 36 traversé par l'eau à haute température 37, et un étage à basse température 38, traversé par de l'eau à basse température 39 provenant, par exemple, d'un radiateur à basse température. L'étage à haute température 36 comporte deux sections d'échange de chaleur, à savoir une section d'échange de chaleur 40 traversée par l'air d'alimentation du moteur 41, et une section d'échange 42 traversée par les gaz d'échappement recirculés 43, comme schématisé par la flèche 43. La section d'échange de chaleur 40, destinée à l'air d'alimentation du moteur, fonctionne comme l'échangeur 22 de la Figure 3. L'air admis dans le moteur peut être refroidi d'abord par l'étage à haute température, puis par l'étage à basse température. Ou bien, en configuration de démarrage du moteur ou de régénération du filtre à particules, l'air admis dans le moteur peut être réchauffé par échange de chaleur avec l'eau à haute température. La seconde section d'échange 42, destinée aux gaz d'échappement recirculés, comporte un étage unique. Les gaz d'échappement sont refroidis exclusivement par échange de chaleur avec l'eau à haute température, ce qui répond à un possible problème de colmatage de l'échangeur 34.

L'échangeur 44 d'un dispositif selon l'invention représenté sur la Figure 7 est identique à l'échangeur 34 représenté sur la Figure 6, à ceci près que la section d'échange de chaleur 42, destinée au refroidissement des gaz d'échappement, comporte un étage à haute température et un étage à basse température. Les gaz d'échappement sont donc refroidis d'abord par échange de chaleur avec l'eau à haute température, puis par échange de chaleur avec l'eau à basse température. On améliore ainsi le refroidissement des gaz d'échappement, ce qui contribue à réduire encore davantage la formation d'oxyde d'azote.

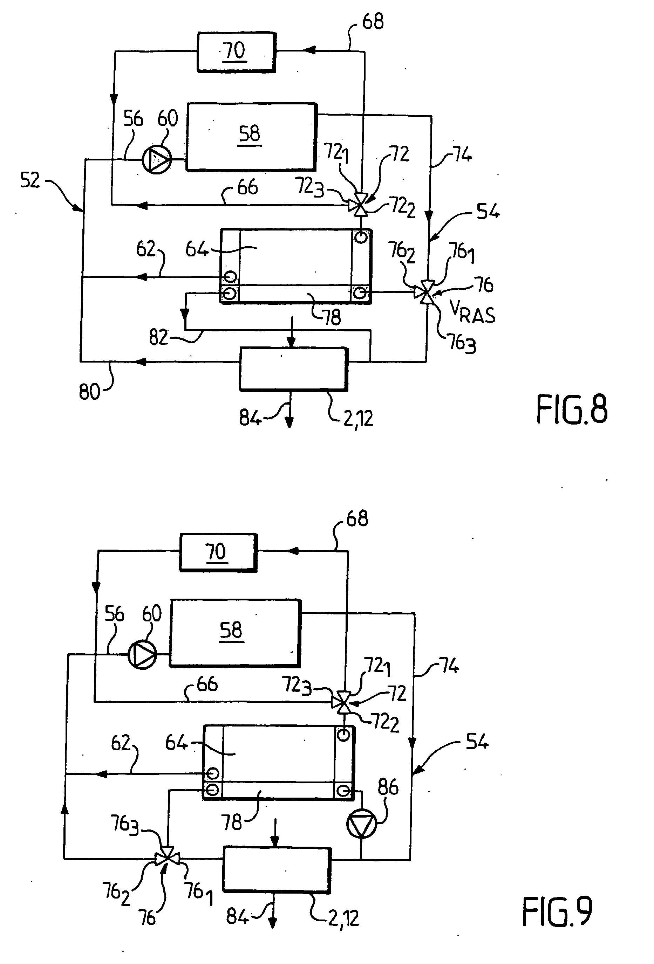

On a représenté sur la Figure 8 une vue d'ensemble d'un dispositif de gestion de la température des gaz admis dans un moteur thermique de véhicule automobile. Ce dispositif comprend une boucle principale 52 et une boucle secondaire désignée par la référence générale 54.

La boucle principale 52 comprend une canalisation de moteur 56 raccordée au moteur thermique 58 du véhicule. Une pompe 60 mécanique ou électrique alimente le circuit de refroidissement du moteur 58. La boucle principale 52 comprend également une canalisation de radiateur 62 sur laquelle est monté un radiateur principal 64 ou radiateur à haute température traversé par le fluide caloporteur de refroidissement du moteur. Une canalisation de court-circuit 66 est montée en parallèle à la canalisation de radiateur 62.

La boucle principale comprend encore une canalisation de chauffage 68 sur laquelle est monté un aérotherme 70 ou radiateur de chauffage de l'habitacle du véhicule. Une vanne de régulation 72 à trois voies désignées par les références 72₁, 72₂ et 72₃ permet de faire circuler le fluide caloporteur de refroidissement du moteur thermique 58 soit dans la canalisation de court-circuit 66, soit dans le radiateur à haute température 64. La vanne de régulation est sensible à la température du liquide caloporteur. En dessous d'une température de seuil, par exemple 100°C, la vanne de régulation 72 fait circuler le fluide caloporteur par la canalisation de court-circuit 66. Au contraire, lorsque la température du fluide caloporteur dépasse cette valeur de seuil, la voie 72₃ de la vanne de régulation 72 est fermée, tandis que les voies 72₁ et 72₂ sont ouvertes, de telle sorte que le fluide caloporteur traverse le radiateur à haute température 64 afin d'être refroidi.

La boucle secondaire 54 comporte une canalisation 74 raccordée à la sortie du circuit de refroidissement du moteur thermique. Une vanne de refroidisseur d'air de suralimentation (V_{RAS}) 76 est raccordée à la canalisation 74. La vanne 76 comporte trois voies indicées respectivement 76₁, 76₂ et 76₃. La voie 76₂ est raccordée à un radiateur à basse température 78, tandis que la voie 76₃ est raccordée à une canalisation 80. Un échangeur de chaleur conforme à l'invention est intercalé sur la canalisation 80. Dans l'exemple représenté, l'échangeur est un échangeur à étage unique tel que les échangeurs 2 et 12 représentés sur les Figures 1 et 2.

Une canalisation 82 relie la sortie du radiateur à basse température à l'entrée de l'échangeur 2, 12.

Le dispositif de gestion de l'énergie thermique représenté sur la Figure 8 peut fonctionne soit dans une configuration de réchauffage de l'air d'admission, soit dans une configuration de refroidissement de l'air de suralimentation. Au démarrage du moteur, il est nécessaire de réchauffer l'air admis. A cette fin, les voies 76₁ et 76₃ de la vanne de refroidisseur d'air de suralimentation 76 sont ouvertes, tandis que la voie 76₂ est fermée. Le fluide caloporteur à haute température sortant du moteur 58 traverse alors l'échangeur de chaleur 2, 12 de telle sorte que l'air admis dans le moteur, schématisé par la flèche 84, est réchauffé. Au contraire, lorsque l'on désire refroidir l'air de suralimentation, les voies 76₁ et 76₂ de la vanne 76 sont ouvertes, tandis que la voie 76₃ est fermée. Le fluide caloporteur chaud en provenance du moteur est alors dirigé vers le radiateur à basse température 78 dans lequel il est refroidi. Par la canalisation 82, il parvient en amont de l'échangeur 2, 12. C'est ainsi un fluide caloporteur à basse température qui traverse l'échangeur de telle sorte que l'air sortant du radiateur, schématisé par la flèche 84, est refroidi. On a représenté sur la Figure 9 une variante de réalisation du dispositif de gestion de l'énergie représenté sur la Figure 8. Dans cette variante, la boucle secondaire 54 comprend une pompe à basse température 86. La vanne de refroidissement de l'air de suralimentation (V_{RAS}) 76 est placée en sortie de l'échangeur 2, 12. Lorsque la pompe à basse température 86 n'est pas en fonctionnement, le système fonctionne, comme décrit précédemment, en réchauffeur de l'air d'admission. Le fluide caloporteur à haute température sortant du moteur thermique 58 pénètre directement dans l'échangeur 2, 12 et échauffe l'air admis dans l'échangeur, comme schématisé par la flèche 84. Au contraire, lorsque la pompe à basse température 86 est en fonctionnement, on réalise un piquage sur le circuit à haute température. Les voies 76₁ et 76₃ de la vanne 76 sont ouvertes. Le fluide caloporteur est refroidi par circulation dans le radiateur à basse température. On réalise ainsi le refroidissement de l'air de suralimentation 84.

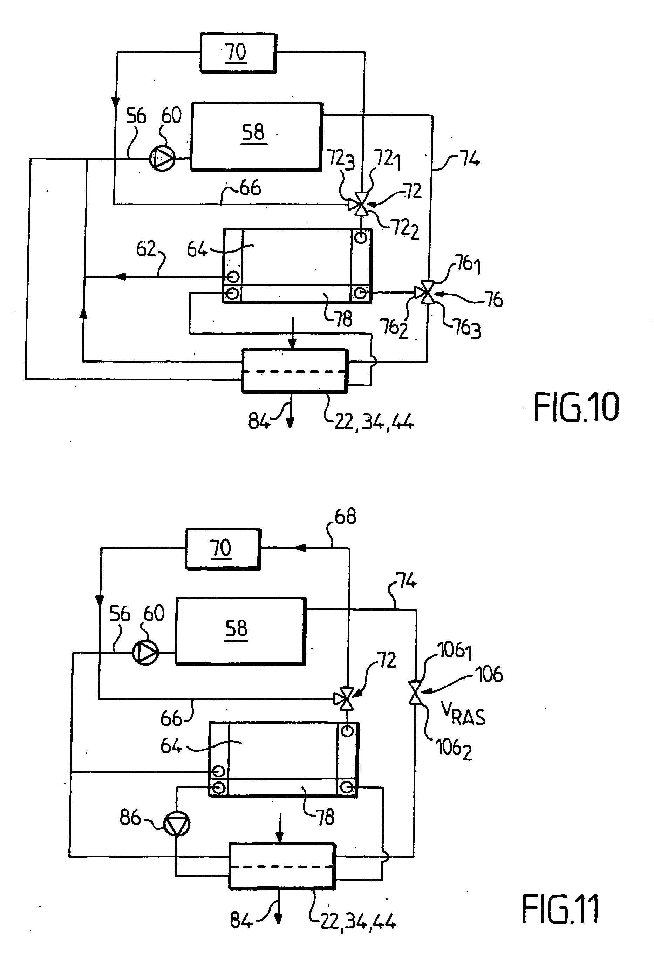

Le dispositif représenté sur la Figure 10 est identique à celui de la Figure 8, à l'exception du fait que l'échangeur de chaleur est un échangeur à deux étages d'un dispositif selon l'invention, respectivement un étage à haute température et un étage à basse température. Cet échangeur peut donc être l'échangeur 22 de la Figure 3, l'échangeur 34 de la Figure 6 ou l'échangeur 44 de la Figure 7. Lorsque les voies 76₁, 76₂, 76₃ de la vanne 76 sont ouvertes, l'échangeur 22, 34, 44 fonctionne comme refroidisseur d'air de suralimentation à deux étages. Lorsque les voies 76₁ et 76₂ sont ouvertes, tandis que la voie 76₃ est fermée, l'échangeur fonctionne en refroidisseur d'air de suralimentation à un seul étage. Lorsque les voies 76₁ et 76₃ sont ouvertes, la voie 76₂ étant fermée, l'échangeur fonctionne comme réchauffeur d'air de suralimentation.

Le dispositif de gestion représenté sur la Figure 11 est identique à celui de la Figure 9, à l'exception du fait que l'échangeur de chaleur est un échangeur à deux étages d'un dispositif selon l'invention du type représenté sur les Figure 3, 6 et 7. La canalisation 74 en provenance de la sortie du moteur à combustion interne 58 traverse directement l'étage à haute température. Une boucle de circulation à basse température traversant le radiateur à basse température 78 est mise en circulation par la pompe à basse température 86. Le fluide à basse température traverse l'étage à basse température de l'échangeur 22, 34, 44.

La vanne de refroidisseur d'air de suralimentation 106 est une vanne à deux voies seulement, indicées 106₁ et 106₂, respectivement. Lorsque les voies 1 et 2 de la vanne 106 sont ouvertes, et que la pompe à basse température 86 n'est pas en fonctionnement, le fluide caloporteur chaud sortant du moteur 58 traverse directement l'étage à haute température et l'air admis dans le moteur est réchauffé (période de démarrage du moteur). Lorsque la pompe à basse température 86 est actionnée, dans la même configuration de la vanne 106, on réalise un refroidissement à deux étages de l'air de suralimentation. Lorsque la vanne 106 est fermée, la pompe 86 étant en fonctionnement, on réalise un refroidisseur d'air de suralimentation à un seul étage.

Lorsque l'échangeur comporte deux étages, il est nécessaire de limiter le pont thermique entre l'étage à haute température et l'étage à basse température. Ceci est réalisé par enlèvement de matière sur les ailettes communes des deux étages ou par un procédé équivalent schématisé par le trait interrompu 28 de la figure 3.

## Revendications

1. Procédé de contrôle de la température des gaz admis dans un moteur à combustion interne (58), notamment de véhicule automobile, dans lequel on fait circuler un liquide à haute température et/ou un liquide à basse température dans un échangeur liquide/gaz afin de réchauffer et/ou de refroidir les gaz (84) en fonction des besoins, procédé dans lequel on fait circuler les gaz dans l'échangeur liquide/gaz (22, 34, 44) préalablement à leur admission dans le moteur thermique à combustion interne (58), ledit échangeur liquide/gaz comportant un étage à haute température (24, 36) dans lequel peut circuler un liquide à haute température, et un étage à basse température (26, 38) dans lequel peut circuler le liquide à basse température, et dans lequel on contrôle la circulation des liquides à haute température et à basse température en fonction des besoins, **caractérisé en ce que** l'étage à haute température (36) dudit échangeur de type liquide/gaz comporte une section (40) traversée par l'air d'alimentation du moteur (41) et une section (42) traversée par une fraction recirculée (43) des gaz d'échappement.

2. Dispositif de gestion de la température des gaz admis dans un moteur thermique (58), notamment de véhicule automobile, comprenant une boucle principale (52) équipée d'une pompe principale (60) pour faire circuler un fluide caloporteur entre le moteur thermique (58) et un radiateur principal (64) de refroidissement à haute température, comprennant une boucle secondaire (54) incluant un radiateur secondaire à basse température (78), le dispositif comprenant en outre un échangeur liquide/gaz (22, 34, 44) comportant un étage à haute température (24, 36) dans lequel peut circuler un liquide à haute température, et un étage à basse température (26, 38) dans lequel peut circuler le liquide à basse température, ledit étage à haute température (36) dudit échangeur de type liquide/gaz comportant une section (40) traversée par l'air d'alimentation du moteur (41) et une section (42) traversée par une fraction recirculée (43) des gaz d'échappement, et des moyens d'interconnexion (76, 86, 106) qui permettent de faire circuler le fluide caloporteur dans l'échangeur liquide/gaz en fonction des besoins de réchauffer et/ou de refroidir les gaz admis (84) dans le moteur (58).

3. Dispositif selon la revendication 2, dans lequel l'étage à basse température (38) dudit échangeur de type liquide/gaz comporte également une section (42) traversée par une fraction recirculée (43) des gaz d'échappement.

4. Dispositif de gestion selon la revendication 3, **caractérisé en ce qu'**il comporte en outre une vanne (76) à trois voies permettant de faire circuler le fluide caloporteur chaud sortant du moteur à combustion interne (58) dans l'étage à haute température et un fluide caloporteur froid refroidi dans le radiateur à basse température (68) dans l'étage à basse température de l'échangeur.

5. Dispositif de gestion selon la revendication 3, **caractérisé en ce qu'**il comporte en outre une vanne à deux voies (106) permettant de faire circuler le fluide caloporteur chaud sortant directement du moteur à combustion interne (58) dans l'étage à haute température de l'échangeur (22, 34, 44), une boucle additionnelle équipée d'une pompe de circulation (86) permettant de faire circuler le fluide caloporteur froid refroidi dans le radiateur à basse température (78) dans l'étage à basse température de l'échangeur (22, 34, 44).

## Claims

1. Method for controlling the temperature of the gases entering an internal combustion engine (58), particularly of an automotive vehicle, in which a high temperature liquid and/or a low temperature liquid is circulated in a liquid/gas heat exchanger in order to heat and/or cool the gases (84) as required, in which method the gases are circulated in the liquid/gas heat exchanger (22, 34, 44) prior to entering the internal combustion heat engine (58), the said liquid/gas heat exchanger comprising a high temperature stage (24, 36) in which a high temperature liquid can circulate, and a low temperature stage (26, 38) in which the low temperature liquid can circulate, and in which the circulation of the high temperature and low temperature liquids is controlled as required, **characterized in that** the high temperature stage (36) of the said liquid/gas type heat exchanger comprises a section (40) through which the engine intake air (41) passes and a section (42) through which a recirculated fraction (43) of the exhaust gases passes.

2. Device for managing the temperature of the gases entering a heat engine (58), particularly of an automotive vehicle, comprising a main loop (52) equipped with a main pump (60) for circulating a heat transfer fluid between the heat engine (58) and a main radiator (64) for cooling at high temperature, comprising a secondary loop (54) including a secondary low temperature radiator (78), the device further comprising a liquid/gas heat exchanger (22, 34, 44) comprising a high temperature stage (24, 36) in which a high temperature liquid can circulate, and a low temperature stage (26, 38) in which the low temperature liquid can circulate, the said high temperature stage (36) of the said liquid/gas type heat exchanger comprising a section (40) through which the engine intake air (41) passes and a section (42) through which a recirculated fraction (43) of the exhaust gases passes, and interconnecting means (76, 86, 106) for circulating the heat transfer fluid in the liquid/gas heat exchanger as required to heat and/or cool the gases (84) entering the engine (58).

3. Device according to Claim 2, in which the low temperature stage (38) of the said liquid/gas type heat exchanger also comprises a section (42) through which a recirculated fraction (43) of the exhaust gases passes.

4. Management device according to Claim 3, **characterized in that** it further comprises a three-way valve (76) for circulating the hot heat transfer fluid leaving the internal combustion engine (58) in the high temperature stage, and a cold heat transfer fluid cooled in the low temperature radiator (68) in the low temperature stage of the heat exchanger.

5. Management device according to Claim 3, **characterized in that** it further comprises a two-way valve (106) for circulating the hot heat transfer fluid directly leaving the internal combustion engine (58) in the high temperature stage of the heat exchanger (22, 34, 44), an additional loop equipped with a circulating pump (86) for circulating the cold heat transfer fluid cooled in the low temperature radiator (78) in the low temperature stage of the heat exchanger (22, 34, 44).

## Patentansprüche

1. Verfahren zur Regelung der in eine Brennkraftmaschine (58), insbesondere eines Kraftfahrzeugs, angesaugten Gase, bei dem man eine Hochtemperatur-Flüssigkeit und/oder eine Niedrigtemperatur-Flüssigkeit durch einen Gas-Flüssig-Wärmetauscher fließen lässt, um die Gase (84) bedarfsgemäß zu erwärmen und/oder abzukühlen, ein Verfahren, bei dem man die Gase vor ihrem Ansaugen in die Brennkraftmaschine (58) im Gas-Flüssig-Wärmetauscher (22, 34, 44) fließen lässt, wobei der Gas-Flüssig-Wärmetauscher eine Hochtemperaturstufe (24, 36), in der eine Hochtemperatur-Flüssigkeit fließen kann, und eine Niedrigtemperaturstufe (26, 38) aufweist, in der die Niedrigtemperatur-Flüssigkeit fließen kann, und bei dem das Fließen der Hochtemperatur- und Niedrigtemperatur-Flüssigkeiten bedarfsgemäß geregelt wird, **dadurch gekennzeichnet, dass** die Hochtemperaturstufe (36) des Gas-Flüssig-Wärmetauschers einen von der Ansaugluft des Motors (41) durchquerten Abschnitt (40) und einen von einem rückgeführten Anteil (43) der Abgase durchquerten Abschnitt (42) aufweist.

2. Vorrichtung zum Temperaturmanagement der in eine Wärmekraftmaschine (58), insbesondere eines Kraftfahrzeugs, angesaugten Gase, mit einer Hauptschleife (52), die mit einer Hauptpumpe (60) ausgestattet ist, um ein Wärmeträgerfluid zwischen der Wärmekraftmaschine (58) und einem Hochtemperatur-Hauptkühler (64) fließen zu lassen, mit einer Sekundärschleife (54), die einen Niedrigtemperatur-Sekundärkühler (78) umfasst, wobei die Vorrichtung außerdem einen Gas-Flüssig-Wärmetauscher (22, 34, 44), der eine Hochtemperaturstufe (24, 36), in der eine Hochtemperatur-Flüssigkeit fließen kann, und eine Niedrigtemperaturstufe (26, 38) aufweist, in der die Niedrigtemperatur-Flüssigkeit fließen kann, wobei die Hochtemperaturstufe (36) des Gas-Flüssig-Wärmetauschers einen von der Ansaugluft des Motors (41) durchquerten Abschnitt (40) und einen von einem rückgeführten Anteil (43) der Abgase durchquerten Abschnitt (42) aufweist, und Verbindungseinrichtungen (76, 86, 106) enthält, die es ermöglichen, das Wärmeträgerfluid im Gas-Flüssig-Wärmetauscher in Abhängigkeit von den Bedürfnissen des Erwärmens und/oder Abkühlens der in den Motor (58) angesaugten Gase (84) fließen zu lassen.

3. Vorrichtung nach Anspruch 2, bei der die Niedrigtemperaturstufe (38) des Gas-Flüssig-Wärmetauschers ebenfalls einen Abschnitt (42) aufweist, der von einem rückgeführten Anteil (43) der Abgase durchquert wird.

4. Managementvorrichtung nach Anspruch 3, **dadurch gekennzeichnet, dass** sie außerdem ein Dreiwegeventil (76) aufweist, das es ermöglicht, das aus der Brennkraftmaschine (58) austretende warme Wärmeträgerfluid in der Hochtemperaturstufe und ein im Niedrigtemperatur-Kühler (68) gekühltes kaltes Wärmeträgerfluid in der Niedrigtemperaturstufe des Wärmetauschers fließen zu lassen.

5. Managementvorrichtung nach Anspruch 3, **dadurch gekennzeichnet, dass** sie außerdem ein Zweiwegeventil (106) aufweist, das es ermöglicht, das direkt aus der Brennkraftmaschine (58) austretende warme Wärmeträgerfluid in der Hochtemperaturstufe des Wärmetauschers (22, 34, 44) fließen zu lassen, wobei eine zusätzliche Schleife, die mit einer Umwälzpumpe (86) ausgestattet ist, es ermöglicht, das im Niedrigtemperatur-Kühler (78) gekühlte, kalte Wärmeträgerfluid in der Niedrigtemperaturstufe des Wärmetauschers (22, 34, 44) fließen zu lassen.
